# EUROPEAN PATENT APPLICATION

(11) **EP 4 567 083 A1**
(43) Date of publication of application: **11.06.2025**
(21) Application number: 23307124.0
(22) Date of filing: 04.12.2023
(51) Int. Cl.: C09J 4/00, C09J 4/06

(54) **USE OF A COMPOSITION COMPRISING N-HEPTYLCYANOACRYLATE IN AN ELECTRIC, ELECTRONIC OR OPTICAL DEVICE**

(71) Applicant: Bostik SA, 92800 Puteaux (FR)
(72) Inventor: GARRA, Patxi, 08193 Bellaterra, Barcelona (ES); FAGGI, Enrico, 08193 Bellaterra, Barcelona (ES); PÉREZ DORADO, Eva, 08193 Bellaterra, Barcelona (ES); ESCRIBÀ PLA, Marc, 08193 Bellaterra, Barcelona (ES); BRAU I VIUDEZ, Núria, 08193 Bellaterra, Barcelona (ES)
(74) Representative: Arkema Patent

(57) **Abstract**

The present invention relates to the use of composition comprising:
- n-heptylcyanoacrylate;
- a thickener;
wherein said composition has a viscosity ranging from 100 to 7 000 mPa.s at 25°C, in an electric or electronic or optical device.

## Description

### FIELD

The present invention relates to a composition comprising n-heptylcyanoacrylate, a thickener, and its uses such as for example in an electric or electronic or optical device.

The present invention also relates to the use of a composition comprising n-heptyl cyanoacrylate, a thickener, for improving the lifetime of a joint in an electronic, electric or optical device.

### BACKGROUND

In the field of consumer electronics, different types of adhesives are commonly used. There exist hot melt reactive polyurethane compositions (HMPUR) which require heavy equipment, heat solicitation of substrates and involve isocyanates which are to be avoided. Two-part compositions based on methylmethacrylate are also used in this field, but raise problems of heavy equipment, oxygen inhibition, slow speed of cure and presence of peroxide for the curing. Besides UV technology is also encountered in electronics, but is not adapted to all kind of substrates such as opaque substrates.

Adhesive compositions based on cyanoacrylate (CA) esters are well-known, e.g. as instant adhesives or so-called 'superglues'. They are popular in many areas of application and are used by consumers, professional craft workers and industrial assemblers. They are typically solvent free, 100% reactive materials, noted for their ability to form strong adhesive bonds on many different substrates rapidly.

Single component cyanoacrylates (1KCA) are particularly effective solutions due to ease of use for manual, semi-automatic and automatic dispensing solutions. While highly popular in many markets, industrial assemblers of the electronics industry are highly reluctant to use them. Two technical limitations are seen in existing cyanoacrylate compositions: Blooming and durability performance of the adhesive joint under high temperature and high relative humidity.

Blooming is a problem in electronics. Blooming can be described as uncured monomer evaporating from bond line/squeeze out and getting polymerized around the adhesive joint by ambient humidity/nucleophile present on substrates. This is a particularly difficult problem in electronics assembly as the oligomers polymerizing on the substrates can compromise electrical condition further needed on PCB boards. Also, aspect of assembly is whitish which is not desired by users.

While low blooming solutions are gaining more and more market share, those solutions remain imperfect as their durability performance is extremely poor, even when introducing components known to skilled person in the art to boost thermal and/or humidity resistance (anhydrides, benzonitriles, acrylates, etc...).

Besides, typical 1K cyanoacrylate composition exhibit high stiffness.

There is a need to overcome at least partially one of the above-mentioned drawbacks.

More particularly, there is a need for a fast composition exhibiting a good compromise of low blooming and high resistance to both high temperature (such as for example up to 85°C) and high relative humidity (such as for example up to 85%), which is suitable for use in electronic, electric and optical device.

### DESCRIPTION OF THE INVENTION

The present invention relates to the use of a composition comprising:
- n-heptylcyanoacrylate;
- a thickener;

wherein said composition has a viscosity ranging from 100 to 7 000 mPa.s at 25°C,
in an electric or electronic or optical device.

Preferably, the above-mentioned use is for improving the lifetime of a joint and/or for reducing (preferably avoiding) blooming in said electronic, electric or optical device.

Preferably, the joint is an adhesive joint.

Preferably, the joint obtained from the composition exhibits a tensile shear of at least 80% of the initial value (tensile shear after 24h at 85°C and 85% RH) after 500 hours at 85°C and 85% RH.

More preferably, the joint obtained from the composition exhibits a tensile shear of at least 50% of the initial value (tensile shear after 24h at 85°C and 85% RH) after 1000 hours at 85°C and 85%RH.

The tensile shear is typically measured according to ASTM D1002, and more particularly according to the method disclosed in the experimental part.

Preferably, the composition is used for bonding substrates which are selected from the group consisting of Acrylonitrile butadiene styrene (ABS), polycarbonate (PC), Polybutylene terephthalate (PBT), Polyamides (PA), inked glass, glass, stainless steel, mild steel, aluminium, polymethylmethacrylate (PMMA), wood, polyethylene terephthalate (PET), nitrile butadiene rubber (NBR), leather, polyvinylchloride (PVC), fabric, copper, nickel, neodymium, phenolic resin, polystyrene, polyethylene, polypropylene.

The present invention also relates to the use of a composition comprising:
- n-heptylcyanoacrylate;
- a thickener;

said composition having a viscosity ranging from 100 to 7 000 mPa.s at 25°C,
for improving the lifetime of a joint in an electronic, electric or optical device.

Preferably, the above-mentioned use is for reducing (more preferably avoiding) blooming in said electronic, electric or optical device.

Preferably, the joint is an adhesive joint.

Preferably, the joint obtained from the composition exhibits a tensile shear of at least 80% of the initial value (tensile shear after 24h at 85°C and 85% RH) after 500 hours at 85°C and 85% RH.

More preferably, the joint obtained from the composition exhibits a tensile shear of at least 50% of the initial value (tensile shear after 24h at 85°C and 85% RH) after 1000 hours at 85°C and 85%RH.

Preferably, the composition is used in the electronic or electric or optical device for bonding substrates which are selected from the group consisting of Acrylonitrile butadiene styrene (ABS), polycarbonate (PC), Polybutylene terephthalate (PBT), Polyamides (PA), inked glass, glass, stainless steel, mild steel, aluminium, polymethylmethacrylate (PMMA), wood, polyethylene terephthalate (PET), nitrile butadiene rubber (NBR), leather, polyvinylchloride (PVC), fabric, copper, nickel, neodymium, phenolic resin, polystyrene, polyethylene, polypropylene.

The present invention also relates to a method for improving the lifetime of a joint of electronic, electric or optical component, said method comprising using a composition comprising:
- n-heptylcyanoacrylate;
- a thickener;
said composition having a viscosity ranging from 100 to 7 000 mPa.s at 25°C.

Preferably, the method is further for reducing (more preferably avoiding) blooming in said electronic, electric or optical device.

Preferably, the joint is an adhesive joint.

Preferably, the method is for improving the lifetime of a joint in an electronic, electric or optical device.

Preferably, the joint obtained from the composition exhibits a tensile shear of at least 80% of the initial value (tensile shear after 24h at 85°C and 85% RH) after 500 hours at 85°C and 85% RH.

Preferably, the joint is formed between substrates which are selected from the group consisting of Acrylonitrile butadiene styrene (ABS), polycarbonate (PC), Polybutylene terephthalate (PBT), Polyamides (PA), inked glass, glass, stainless steel, mild steel, aluminium, polymethylmethacrylate (PMMA), wood, polyethylene terephthalate (PET), nitrile butadiene rubber (NBR), leather, polyvinylchloride (PVC), fabric, copper, nickel, neodymium, phenolic resin, polystyrene, polyethylene, polypropylene.

More preferably, the joint obtained from the composition exhibits a tensile shear of at least 50% of the initial value (tensile shear after 24h at 85°C and 85% RH) after 1000 hours at 85°C and 85%RH.

The present invention also concerns an electronic, electric or optical device comprising at least one joint formed from a composition comprising:
- n-heptylcyanoacrylate;
- a thickener;
said composition having a viscosity ranging from 100 to 7 000 mPa.s at 25°C.

Preferably, the joint is formed between substrates which are selected from the group consisting of Acrylonitrile butadiene styrene (ABS), polycarbonate (PC), Polybutylene terephthalate (PBT), Polyamides (PA), inked glass, glass, stainless steel, mild steel, aluminium, polymethylmethacrylate (PMMA), wood, polyethylene terephthalate (PET), nitrile butadiene rubber (NBR), leather, polyvinylchloride (PVC), fabric, copper, nickel, neodymium, phenolic resin, polystyrene, polyethylene, polypropylene.

The present invention also relates to a composition comprising:
- n-heptylcyanoacrylate ;
- a thickener,

said composition having a viscosity ranging from 100 to 7 000 mPa.s at 25°C,
provided that the composition is not a composition consisting of n-heptylcyanocrylate, 950 ppm butylhydroxyanisole, 1 ppm of methane sulfonic acid, 5 ppm of sulfur dioxide, 8% by weight of a copolymer of polyvinylchloride and polyvinylacetate, and 0.15wt% of dibenzo-18-crown-6, based on the total weight of the composition.

Preferably, the composition does not comprise metallocene compound.

Preferably, the composition does not comprise photoinitiator.

The following detailed description, preferred embodiments apply for all objects: composition, method and uses.

In particular, the following detailed description, preferred embodiments for the composition, its ingredients, electronic, electric or optical device/component, without need to repeat it.

### Composition

The composition comprises n-heptylcyanoacrylate, and a thickener, said composition having a viscosity ranging from 100 to 7 000 mPa.s at 25°C.

The viscosity may be measured according to the ASTM D3236 standard and in a Brookfield viscometer. For example, it can be measured in Brookfield viscometer Brookfield DVNext Spindle 52z at 100 rpm, or with Spindle 14 at 50 rpm if viscosity at 25°C is above 1 000 mPa.s.

In one preferred embodiment, the viscosity ranges from 100 to 1 000 mPa.s at 25°C, even more preferably from 110 to 500 mPa.s at 25°C.

In another preferred embodiment, the viscosity ranges from 3 000 to 7 000 mPa.s at 25°C, more preferably from 5 000 to 7 000 mPa.s at 25°C.

The composition preferably comprises more than 50 % by weight, more preferably more than 70 % by weight, and even more preferably more than 80 % by weight of n-heptylcyanoacrylate, based on the total weight of said composition.

Even more preferably, the composition comprises more than 85 % by weight of n-heptylcyanoacrylate.

N-heptylcyanoacrylate may be at least partially biobased, i.e. derived at least partially from renewable resources.

Preferably, the n-heptylcyanoacrylate has a biocarbon content equal to or higher than 30%, more preferably equal to or higher than 45%.

The terms "biocarbon" or "biobased carbon" indicates that the carbon is of renewable origin, or of natural origin and originates from a biomaterial, as indicated below. The biocarbon content and the biomaterial content are expressions denoting the same value.

A material of renewable origin, also called biomaterial, is an organic material in which the carbon derives from CO₂ recently fixed (on a human scale) by photosynthesis from the atmosphere. On earth, this CO₂ is captured or fixed by plants. At sea, CO₂ is captured or fixed by bacteria or plankton carrying out photosynthesis. A biomaterial (100% carbon of natural origin) has a ¹⁴C/¹²C isotope ratio greater than 10⁻¹², typically of approximately 1.2 x 10⁻¹², while a fossil material has a zero ratio. Indeed, the isotope ¹⁴C is formed in the atmosphere and is then integrated by photosynthesis, according to a time scale of a few decades at most. The half-life of ¹⁴C is 5730 years. Thus, materials resulting from photosynthesis, namely plants in general, necessarily have a maximum ¹⁴C isotope content.

The biomaterial content or biocarbon content is determined by using the standards ASTM D 6866 (ASTM D 6866-21, method B).

Synthesis of n-heptylcyanoacrylate may be performed according to methods known by the man skilled in the art. Knovenagel synthesis and crackless synthesis are typically used by the man skilled in the art. Batch or continuous distillations may be used, in presence of radical and acid stabilizers.

N-heptylcyanoacrylate may also be commercially available from Bostik.

The weight ratio n-heptylcyanoacrylate: thickener in the composition may range from 82 : 18 to 97 : 3.

The thickener is preferably selected from the group consisting of: polyvinyl acetates, partially hydrolyzed polyvinyl acetates, copolymers of polyvinyl chloride and polyvinyl acetate, copolymers of polyethylene and polyvinyl acetate, copolymers of vinyl chloride and acrylonitrile, and mixtures thereof.

Copolymers of polyethylene and polyvinyl acetate are typically commercially available under the tradename LEVAMELT by Lanxess. Examples are LEVAMELT^{®} 400, LEVAMELT^{®} 600 and LEVAMELT^{®} 900. The LEVAMELT products typically differs in the amount of vinyl acetate present. For example, LEVAMELT^{®} 400 comprises an ethylene-vinyl acetate copolymer comprising 40 wt% vinyl acetate.

Examples of copolymers of polyvinyl chloride and polyvinyl acetate are VINNOL products commercialized by Wacker. It covers both copolymers and terpolymers.

Copolymers of polyvinyl chloride and polyvinyl acetate typically include terpolymers of vinyl chloride, vinyl acetate and dicarboxylic acids.

The thickener is advantageously selected so as to be soluble in the n-heptylcyanoacrylate.

More preferably, the thickener is a copolymer of polyvinyl chloride and polyvinyl acetate.

Preferably, the total weight content of thickeners in the composition ranges from 3 to 18 % by weight, more preferably from 4 to 15 % by weight, based on the total weight of the composition.

The composition may comprise additional cyanoacrylate (different from n-heptylcyanoacrylate). Preferably, the content of additional cyanoacrylate is less than or equal to 20% by weight based on the total weight of the composition.

More preferably, the composition comprises less than or equal to 20% by weight of methoxyethyl cyanoacrylate.

The composition may comprise at least one additional ingredient for example selected from the group consisting of: an acid stabilizing agent, a radical stabilizing agent, a metal adhesion promoter, a thixotropic agent, a toughener, an accelerating agent, a filler, a plasticizer, and mixtures thereof.

Radical stabilizing agents are typically radical polymerization inhibitors, and are preferably selected from the group consisting of 4-methoxyphenol, hydroquinone, hydroquinone monomethyl ether, hydroxytoluene butyl ether, hydroxyanisole butyl ether, 4,4'-methylenebis (2,6-di-tert-butylphenol), and mixtures thereof.

The total content of radical stabilizing agent(s) in the composition, may range from 0% to 0.2% by weight, preferably from 0.001 % to 0.1 % by weight based on the total weight of said composition.

The acid stabilizing agents are typically inhibitors of the anionic polymerization. The acid stabilizing agent may be selected from the group consisting of Bronsted acids, Lewis acids, and mixtures thereof. The acid stabilizing agent is preferably selected from the group consisting of methanesulfonic acid, p-toluenesulfonic acid, hydrofluoric acid, sulphur dioxide, selenium dioxide and mixtures thereof.

A suitable accelerating agent (or accelerator) may be selected from calixarenes, crown ethers (for example, 15 Crown 5, 18 Crown 6, Dibenzo 18 Crown 6, commercialized by Alfa Aesar), cyclodextrins, and mixtures thereof.

The content of accelerating agent in the composition may range from 0% to 1%, preferably from 0.1% to 1% by weight based on the total weight of the composition.

A suitable thixotropic agent may be selected from the group consisting of hydrogenated castor oil optionally modified by reaction with an amine, polyamides, silica, and mixtures thereof.

Preferably, the thixotropic agent is silica, more preferably fumed silica, even more preferably hydrophobic fumed silica. Hydrophobic fumed silica may also acts as a filler. A hydrophobic fumed silica is commercially available under the commercial denomination Aerosil^{®} R202 from Evonik.

If present, the composition may comprise from 2% to 10% by weight, preferably from 3% to 9% by weight, more preferably from 7% to 9% by weight, of thixotropic agents by total weight of the composition.

Preferably, the composition comprises less than 14 % by weight of plasticizer comprising at least one ester group (based on the total weight of the composition). More preferably, the composition does not comprise a plasticizer comprising at least one ester group.

Preferably, the composition comprises less than 14% by weight of plasticizer based on the total weight of the composition.

Preferably, the total content of additional ingredient(s) in the composition is lower than 5 % by weight, even more preferably lower than 2 % by weight based on the total weight of the composition.

Preferably, the composition does not comprise poly(2-cyanoacrylate).

Preferably, the composition is not a two-part composition.

Preferably, the composition is one-part composition.

Preferably, the composition does not comprise (meth)acrylate component having at least two (meth)acrylate functions.

Preferably, the composition does not comprise nucleophilic initiator.

Preferably, the composition does not comprise transition metal complex.

Preferably, the composition does not comprise epoxy-containing component. Preferably, the composition does not comprise peroxide.

Preferably, the composition does not comprise a polymer having a hydrolysable silyl group.

Preferably, the composition does not comprise onium salt.

Preferably, the composition does not comprise glass particles.

Preferably, the composition does not comprise metallocene.

Preferably, the composition does not comprise photoinitiator.

Preferably, the composition does not comprise 950 ppm of butylhydroxyanisole. More preferably, the composition does not comprise butylhydroxyanisole.

Preferably, the composition does not comprise 0.15wt% of dibenzo-18-crown-6. More preferably, the composition does not comprise dibenzo-18-crown-6.

The composition according to the invention has preferably a glass transition temperature ranging from 40°C to 120°C, more preferably from 50°C to 115°C, even more preferably from 80°C to 112°C.

The glass transition temperature may be measured by dynamic mechanical thermal analysis according to ISO 6721 : 2012 (more specifically parts 1, 5, 11).

The composition according to the invention exhibits preferably a storage modulus at 25°C ranging from 10 to 300 MPa, more preferably from 50 to 150 MPa at 25°C.

The storage modulus may be measured by dynamic mechanical thermal analysis according to ISO 6721.11:2012.

Preferably, the composition has a biocarbon content equal to or higher than 30%, even more preferably higher to or equal to 45%. The biocarbon content is measured as defined above.

The composition preferably comprises:
- more than 80 % by weight of n-heptylcyanoacrylate;
- from 3% to 18% by weight of thickener selected from copolymers of polyvinyl chloride and polyvinyl acetate;
- from 0% to 1% by weight of accelerating agent based on the total weight of the composition;
said composition having a viscosity ranging from 100 to 7 000 mPa.s at 25°C.

In one embodiment, the composition comprises:
- more than 85 % by weight of n-heptylcyanoacrylate;
- from 4% to 15% by weight of thickener selected from copolymers of polyvinyl chloride and polyvinyl acetate;
- from 0.1% to 1% by weight of accelerating agent based on the total weight of the composition;
said composition having a viscosity ranging from 100 to 500 mPa.s at 25°C.

In another embodiment, the composition comprises:
- more than 80 % by weight of n-heptylcyanoacrylate;
- from 4% to 15% by weight of thickener selected from copolymers of polyvinyl chloride and polyvinyl acetate;
- from 0.1% to 1% by weight of accelerating agent based on the total weight of the composition;
- from 2 to 10% by weight of thixotropic agents;
said composition having a viscosity ranging from 3 000 to 7 000 mPa.s at 25°C.

In particular, the composition of the invention is not a composition consisting of n-heptylcyanocrylate, 950 ppm butylhydroxyanisole, 1 ppm of methane sulfonic acid, 5 ppm of sulfur dioxide, 8% by weight of a copolymer of polyvinylchloride and polyvinylacetate, and 0.15wt% of dibenzo-18-crown-6, based on the total weight of the composition.

The composition of the invention advantageously exhibits a good comprise between the following properties:
- High glass transition temperature Tg, for example from 40 to 120°C;
- Low stiffness, preferably exhibiting a storage modulus ranging from 10 to 300 MPa;
- Appropriate viscosity to advantageously stay on the spot where dispensed in the device;
- Fast cure ;
- Low blooming ;
- Good adhesive joint resistance at high temperature (for example at 85°C) and high relative humidity (for example 85%) : advantageously the joint obtained from the composition exhibits a tensile shear of at least 80% of the initial value (tensile shear after 24h at 85°C and 85% RH) after 500 hours at 85°C and 85% RH, the tensile shear being measured according to ASTM D1002, more advantageously a tensile shear of at least 50% if the initial value (tensile shear after 24h at 85°C and 85% RH) after 1000 hours at 85°C and 85%RH;
- Shelf stability (no insoluble particles that might be source of polymerization);
- Good fixturing time even with gaps.

### Electric or electronic or optical device

The electronic device may be selected from the group consisting of light emitting devices, computer devices, In vehicle Infotainment (IVI), mobile phones, a GPS unit, tablets, touch screens, headset...

Preferably, the electronic device is mobile phone or a headset (including True Wireless Stereo, TWS).

The electric device may be selected from the group consisting of control device (for example for motor vehicle), electrical battery (preferably automotive electrical battery).

The optical device may be an image display device or an illumination device. Examples of image display device include for example liquid crystal display, an organic EL diode-Luminescent display. Examples of illumination device include organic EL illumination.

Preferably, the composition as defined herein is used in an electronic or electric or optical device for bonding substrates which are selected from the group consisting of Acrylonitrile butadiene styrene (ABS), polycarbonate (PC), Polybutylene terephthalate (PBT), Polyamides (PA), inked glass, glass, stainless steel, mild steel, aluminium, polymethylmethacrylate (PMMA), wood, polyethylene terephthalate (PET), nitrile butadiene rubber (NBR), leather, polyvinylchloride (PVC), fabric, copper, nickel, neodymium, phenolic resin, polystyrene, polyethylene, polypropylene.

The present invention is further defined with the specific following embodiments.
1. Composition comprising:
   - n-heptylcyanoacrylate;
   - a thickener;
   wherein said composition has a viscosity ranging from 100 to 7 000 mPa.s at 25°C.
2. Composition according to embodiment 1, having a viscosity ranging from 100 to 1 000 mPa.s at 25°C.
3. Composition according to anyone of embodiments 1 or 2, having a viscosity ranging from 110 to 500 mPa.s at 25°C.
4. Composition according to embodiment 1, having a viscosity ranging from 3 000 to 7 000 mPa.s at 25°C.
5. Composition according to anyone of embodiments 1 to 4, comprising more than 50 % by weight of n-heptylcyanoacrylate based on the total weight of said composition.
6. Composition according to anyone of embodiments 1 to 5, comprising more than 70 % by weight of n-heptylcyanoacrylate based on the total weight of the composition.
7. Composition according to anyone of embodiments 1 to 6, comprising more than 80 % by weight of n-heptylcyanoacrylate, based on the total weight of said composition.
8. Composition according to anyone of embodiments 1 to 7, comprising more than 85 % by weight of n-heptylcyanoacrylate based on the total weight of the composition.
9. Composition according to anyone of embodiments 1 to 8, wherein the weight ratio n-heptylcyanoacrylate: thickener in the composition ranges from 82 : 18 to 97 : 3.
10. Composition according to anyone of embodiments 1 to 9, wherein thickener is selected from the group consisting of: polyvinyl acetates, partially hydrolyzed polyvinyl acetates, copolymers of polyvinyl chloride and polyvinyl acetate, copolymers of polyethylene and polyvinyl acetate, copolymers of vinyl chloride and acrylonitrile, and mixtures thereof.
11. Composition according to anyone of embodiments 1 to 10, wherein the thickener is a copolymer of polyvinyl chloride and polyvinyl acetate.
12. Composition according to anyone of embodiments 1 to 11, wherein the total weight content of thickeners in the composition ranges from 3 to 18 % by weight, based on the total weight of the composition.
13. Composition according to anyone of embodiments 1 to 12, wherein the total weight content of thickeners in the composition ranges from 4 to 15 % by weight, based on the total weight of the composition.
14. Composition according to anyone of embodiments 1 to 13, wherein the composition further comprises at least one additional ingredient preferably selected from the group consisting of: an acid stabilizing agent, a radical stabilizing agent, a thixotropic agent, a metal adhesion promoter, a toughener, an accelerating agent, a filler, a plasticizer, and mixtures thereof.
15. Composition according to anyone of embodiments 1 to 14, wherein the total content of stabilizing agent(s) in the composition ranges from 0% to 0.2% by weight, preferably from 0.001% to 0.1% by weight based on the total weight of said composition.
16. Composition according to anyone of embodiments 1 to 15, wherein the content of accelerating agent in the composition ranges from 0% to 1%, preferably from 0.1% to 1% by weight based on the total weight of the composition.
17. Composition according to anyone of embodiments 1 to 16, wherein it comprises from 2% to 10% by weight of thixotropic agents by total weight of the composition.
18. Composition according to anyone of embodiments 1 to 17, wherein it comprises from 3% to 9% by weight of thixotropic agents by total weight of the composition.
19. Composition according to anyone of embodiments 1 to 18, wherein it comprises from 7% to 9% by weight of thixotropic agents by total weight of the composition.
20. Composition according to anyone of embodiments 1 to 19, wherein the thixotropic agent is selected from the group consisting of hydrogenated castor oil optionally modified by reaction with an amine, polyamides, silica, and mixtures thereof.
21. Composition according to anyone of embodiments 1 to 20, wherein the composition comprises less than 14 % by weight of plasticizer comprising at least one ester group based on the total weight of the composition.
22. Composition according to anyone of embodiments 1 to 21, wherein the composition does not comprise a plasticizer comprising at least one ester group.
23. Composition according to anyone of embodiments 1 to 22, wherein the composition comprises less than 14% by weight of plasticizer based on the total weight of the composition.
24. Composition according to anyone of embodiments 1 to 23, wherein the total content of additional ingredient(s) in the composition is lower than 5 % by weight, even more preferably lower than 2 % by weight based on the total weight of the composition.
25. Composition according to anyone of embodiments 1 to 24, wherein the composition does not comprise poly(2-cyanoacrylate).
26. Composition according to anyone of embodiments 1 to 25, wherein the composition is not a two-part composition.
27. Composition according to anyone of embodiments 1 to 26, wherein the composition is one-part composition.
28. Composition according to anyone of embodiments 1 to 27, wherein the composition does not comprise (meth)acrylate component having at least two (meth)acrylate functions.
29. Composition according to anyone of embodiments 1 to 28, wherein the composition does not comprise nucleophilic initiator.
30. Composition according to anyone of embodiments 1 to 29, wherein the composition does not comprise transition metal complex.
31. Composition according to anyone of embodiments 1 to 30, wherein the composition does not comprise epoxy-containing component.
32. Composition according to anyone of embodiments 1 to 31, wherein the composition does not comprise peroxide.
33. Composition according to anyone of embodiments 1 to 32, wherein the composition does not comprise a polymer having a hydrolysable silyl group.
34. Composition according to anyone of embodiments 1 to 33, wherein the composition does not comprise onium salt.
35. Composition according to anyone of embodiments 1 to 34, wherein the composition does not comprise glass particles.
36. Composition according to anyone of embodiments 1 to 35, wherein the composition does not comprise metallocene.
37. Composition according to anyone of embodiments 1 to 36, wherein the composition does not comprise photoinitiator.
38. Composition according to anyone of embodiments 1 to 37, wherein the composition has a glass transition temperature ranging from 40°C to 120°C.
39. Composition according to anyone of embodiments 1 to 38, wherein the composition has a glass transition temperature ranging from 50°C to 115°C.
40. Composition according to anyone of embodiments 1 to 39, wherein the composition has a glass transition temperature ranging from 80°C to 112°C.
41. Composition according to anyone of embodiments 1 to 40, wherein the composition exhibits a storage modulus at 25°C ranging from 10 to 300 MPa.
42. Composition according to anyone of embodiments 1 to 41, wherein the composition exhibits a storage modulus at 25°C ranging from 50 to 150 MPa at 25°C.
43. Composition according to anyone of embodiments 1 to 42, wherein the composition comprises additional cyanoacrylate (different from n-heptylcyanoacrylate).
44. Composition according to anyone of embodiments 1 to 43, wherein the content of additional cyanoacrylate is less than or equal to 20% by weight based on the total weight of the composition.
45. Composition according to anyone of embodiments 1 to 44, wherein the composition comprises less than or equal to 20% by weight of methoxyethylcyanoacrylate.
46. Composition according to anyone of embodiments 1 to 45, wherein the composition comprises:
   - more than 80 % by weight of n-heptylcyanoacrylate;
   - from 3% to 18% by weight of thickener selected from copolymers of polyvinyl chloride and polyvinyl acetate;
   - from 0% to 1% by weight of accelerating agent based on the total weight of the composition;
   said composition having a viscosity ranging from 100 to 7 000 mPa.s at 25°C.
47. Composition according to anyone of embodiments 1 to 46, wherein the composition comprises:
   - more than 85 % by weight of n-heptylcyanoacrylate;
   - from 4% to 15% by weight of thickener selected from copolymers of polyvinyl chloride and polyvinyl acetate;
   - from 0.1% to 1% by weight of accelerating agent based on the total weight of the composition;
   said composition having a viscosity ranging from 100 to 500 mPa.s at 25°C.
48. Composition according to anyone of embodiments 1 to 47, wherein the composition does not comprise 950 ppm of butylhydroxyanisole.
49. Composition according to anyone of embodiments 1 to 48, wherein the composition does not comprise 0.15 wt% of dibenzo-18-crown-6.
50. Composition according to anyone of embodiments 1 to 49, wherein the composition is not a composition consisting of n-heptylcyanocrylate, 950 ppm butylhydroxyanisole, 1 ppm of methane sulfonic acid, 5 ppm of sulfur dioxide, 8% by weight of a copolymer of polyvinylchloride and polyvinylacetate, and 0.15wt% of dibenzo-18-crown-6, based on the total weight of the composition.
51. Composition according to anyone of embodiments 1 to 50, wherein the n-heptylcyanoacrylate has a biocarbon content equal to or higher than 30%.
52. Composition according to anyone of embodiments 1 to 51, wherein the n-heptylcyanoacrylate has a biocarbon content equal to or higher than 45%.
53. Composition according to anyone of embodiments 1 to 52, wherein it has a biocarbon content equal to or higher than 30%.
54. Composition according to anyone of embodiments 1 to 53, where it has a biocarbon content equal to or higher than 45%.
55. Use of a composition according to anyone of embodiments 1 to 54, in an electric or electronic or optical device.
56. Use according to embodiment 55, for improving the lifetime of a joint and/or for reducing (preferably avoiding) blooming in said electronic, electric or optical device.
57. Use according to embodiment 56, wherein the joint is an adhesive joint.
58. Use according to anyone of embodiments 56 to 57, wherein the joint obtained from the composition exhibits a tensile shear of at least 80% of the initial value (tensile shear after 24h at 85°C and 85% RH) after 500 hours at 85°C and 85% RH.
59. Use according to anyone of embodiments 56 to 58, wherein the joint obtained from the composition exhibits a tensile shear of at least 50% of the initial value (tensile shear after 24h at 85°C and 85% RH) after 1000 hours at 85°C and 85%RH.
60. Use according to anyone of embodiments 55 to 59, for bonding substrates which are selected from the group consisting of Acrylonitrile butadiene styrene (ABS), polycarbonate (PC), Polybutylene terephthalate (PBT), Polyamides (PA), inked glass, glass, stainless steel, mild steel, aluminium, polymethylmethacrylate (PMMA), wood, polyethylene terephthalate (PET), nitrile butadiene rubber (NBR), leather, polyvinylchloride (PVC), fabric, copper, nickel, neodymium, phenolic resin, polystyrene, polyethylene, polypropylene.
61. Use of a composition according to anyone of embodiments 1 to 54, for improving the lifetime of a joint in an electronic, electric or optical device.
62. Use according to embodiment 61, for reducing (more preferably avoiding) blooming in said electronic, electric or optical device.
63. Use according to anyone of embodiment 61 or 62, wherein the joint is an adhesive joint.
64. Use according to anyone of embodiments 61 to 63, wherein the joint obtained from the composition exhibits a tensile shear of at least 80% of the initial value (tensile shear after 24h at 85°C and 85% RH) after 500 hours at 85°C and 85% RH.
65. Use according to anyone of embodiments 61 to 64, wherein the joint obtained from the composition exhibits a tensile shear of at least 50% of the initial value (tensile shear after 24h at 85°C and 85% RH) after 1000 hours at 85°C and 85%RH.
66. Use according to anyone of embodiments 61 to 65, for bonding substrates which are selected from the group consisting of Acrylonitrile butadiene styrene (ABS), polycarbonate (PC), Polybutylene terephthalate (PBT), Polyamides (PA), inked glass, glass, stainless steel, mild steel, aluminium, polymethylmethacrylate (PMMA), wood, polyethylene terephthalate (PET), nitrile butadiene rubber (NBR), leather, polyvinylchloride (PVC), fabric, copper, nickel, neodymium, phenolic resin, polystyrene, polyethylene, polypropylene.
67. Use according to anyone of embodiments 55 to 66 wherein:
   the electronic device is selected from the group consisting of light emitting devices, computer devices, In vehicle Infotainment (IVI), mobile phones, a GPS unit, tablets, touch screens, headset;
   the electric device is selected from the group consisting of control device (for example for motor vehicle), electrical battery (preferably automotive electrical battery);
   the optical device is an image display device or an illumination device.
68. Method for improving the lifetime of a joint of electronic, electric or optical component, said method comprising using a composition according to anyone of embodiments 1 to 54.
69. Method according to embodiment 68, for reducing (more preferably avoiding) blooming in electronic, electric or optical device.
70. Method according to anyone of embodiments 68 to 69, wherein the joint is an adhesive joint.
71. Method according to anyone of embodiment 68 to 70, for improving the lifetime of a joint in an electronic, electric or optical device.
72. Method according to anyone of embodiments 68 to 71, wherein the joint obtained from the composition exhibits a tensile shear of at least 80% of the initial value (tensile shear after 24h at 85°C and 85% RH) after 500 hours at 85°C and 85% RH.
73. Method according to anyone of embodiments 68 to 72, wherein the joint obtained from the composition exhibits a tensile shear of at least 50% of the initial value (tensile shear after 24h at 85°C and 85% RH) after 1000 hours at 85°C and 85%RH.
74. Method according to embodiments 69 to 73, wherein:
   the electronic device is selected from the group consisting of light emitting devices, computer devices, In vehicle Infotainment (IVI), mobile phones, a GPS unit, tablets, touch screens, headset;
   the electric device is selected from the group consisting of control device (for example for motor vehicle), electrical battery (preferably automotive electrical battery).
75. Electronic, electric or optical device comprising at least one joint formed from a composition according to anyone of embodiments 1 to 54.
76. Electronic, electric or optical device according to embodiment 75, wherein the joint is formed between substrates which are selected from the group consisting of Acrylonitrile butadiene styrene (ABS), polycarbonate (PC), Polybutylene terephthalate (PBT), Polyamides (PA), inked glass, glass, stainless steel, mild steel, aluminium, polymethylmethacrylate (PMMA), wood, polyethylene terephthalate (PET), nitrile butadiene rubber (NBR), leather, polyvinylchloride (PVC), fabric, copper, nickel, neodymium, phenolic resin, polystyrene, polyethylene, polypropylene.
74. Electronic, electric or optical device according to anyone of embodiments 75 to 76, wherein:
   the electronic device is selected from the group consisting of light emitting devices, computer devices, In vehicle Infotainment (IVI), mobile phones, a GPS unit, tablets, touch screens, headset;
   the electric device is selected from the group consisting of control device (for example for motor vehicle), electrical battery (preferably automotive electrical battery);
   the optical device is an image display device or an illumination device.

The ranges disclosed in this description include both the lower and the upper limit thereof. For example, the expressions "ranging from x to y" or "between x and y" comprises the limits x and y.

### Examples

The following ingredients were used in the examples:

### Example 1: preparation of the compositions

The following ingredients were used to prepare the compositions:
n-heptylcyanoacrylate commercialized by Bostik
Methoxyethyl Cyanaocrylate : MECA commercialized by CMC as CMC1024
SO₂ marketed by Carburos Metalicos, S.A.
PMMA (polymethylmethacrylate): Degacryl^{®} 449 commercialized by Evonik
VinnolOH40/60: thickener copolymer of polyvinylchloride and polyvinylacetate commercialized by Wacker
Levamelt^{®}700: thickener copolymer of polyethylene and polyvinylacetate commercialized by Arlanxeo
Aerosil^{®} R202: hydrophobic fumed silica commercialized by Evonik
Accelerator: Dibenzo 18 Crown 6

The following products were obtained from Sigma Aldrich Merck: BoronTrifluoride etherate complex, Methanesulfonic Acid, 4-methoxyphenol (MEHQ), 2,2'-Methylenebis(6-tert-butyl-4-methylphenol) (2246), hydroquinone (HQ)
Grit blasted mild steel (GBMS) lapshears (for all mechanical testing)
Mild steel (MS) lapshears (for fixture time assessment)

The compositions were prepared by mixing all ingredients at 25°C, except the thickeners, that were added in small portions, at 60-70 °C, over 1-2 hours, and under stirring. The following table discloses the content (% by weight) and nature of ingredients of the compositions.

| | **Comparative Composition 1** | **Comparative Composition 2** | **Composition 3 (invention)** | **Composition 4 (invention)** | **Composition 5 (invention)** |
|---|---|---|---|---|---|
| **MECA** | **-** | **QS 100%** | **-** | **-** | **-** |
| **N-heptylcyanoacry late** | **QS 100%** | **-** | **QS 100%** | **QS 100%** | **QS 100%** |
| **Stabilizer 1 : HQ** | **-** | **0,04%** | **-** | **-** | **-** |
| **Stabilizer 2 : MEHQ** | **-** | **0,06%** | **0,05%** | **0,05%** | **0,05%** |
| **Stabilizer 3 : 2246** | **-** | **0,09%** | **-** | **-** | **-** |
| **Stabilizer 4: methane sulfonic acid** | **-** | **-** | **6 ppm** | **6 ppm** | **6 ppm** |
| **Stabilizer 5: BF₃ etherate** | **-** | **15 ppm** | **-** | **-** | **-** |
| **accelerator** | **0,2%** | **0,2%** | **0,2%** | **0,2%** | **0,2%** |
| **PMMA Degacryl^{®} 449** | **3%** | **5,6%** | **-** | **-** | **-** |
| **VinnolOH40/60** | **-** | **-** | **8.1%** | **7%** | **-** |
| **AerosilOR202** | **-** | **-** | **-** | **7,25%** | **-** |
| **Levamelt^{®}700** | **-** | **-** | **-** | **-** | **8%** |
| **total** | **100%** | **100%** | **100%** | **100%** | **100%** |

### Example 2 : properties

The following methods were used to assess the performance of the compositions:
The viscosity of compositions were measured according to the ASTM D3236 standard and in a Brookfield viscometer DVNext Spindle 52z at 100 rpm (for compositions 1, 2, 3 and 5) and Brookfield DV2T Spindle 14 at 50 rpm (for composition 4).

Fixture time (FT) is the time at which an adhesive bond (250 mm²) is capable of supporting a 3 kg load for 10 seconds at 23 ± 2 °C under 50 % Relative Humidity (RH).

Tensile shear strength test data reflect bond strength measured in MPa after assembling overlapping lapshears (standard test pieces of grit blasted mild steel (GBMS)) with a contact area of 250 mm², measured according to ASTM D1002. The bonded lapshears were first clamped for 24 h at 23°C± 2 °C under 50 % Relative Humidity (RH) and then rested for 7 days before testing. Testing for joint durability was performed on GBMS/GBMS lapshears in 85%HR/85°C standard humidity chambers after 100 hours, 250 hours, 500 hours and 1000 hours. This is a harsh test of 1000 hours that tend to anticipate degradation of the adhesive for the next 20 years. The test is mentioned in many manufacturers guideline for example in GB/T 2423.50 [Environmental Test Part 2: Test Method Test Cy Constant Humidity and Heat is mainly used for accelerated test of components].

Blooming was qualitatively assessed by putting a drop of the adhesive composition on top of a black ABS in a 98%HR / 40°C oven. The more the vapor generated polymerization around the drop the more the blooming. A visual estimation of whitish area is used to estimate the blooming
Dispensability was assessed using setup described in the white paper "Making high precision dispensing of cyanoacrylates in manufacturing possible" published on the 8th of february 2023 on https://born2bond.bostik.com website. A viscotec volumetric pump was supplied by adhesive composition in 30cc Nordson cartridges.

The adhesive was deposited on top of aluminium lapshears and estimation of bead size after dispensing was used to determine its dispensability, a key aspect to be suitable in the electronics bonding applications.

Glass transition was measured by dynamic mechanical thermal analysis according to ISO 6721 : 2012 (more specifically parts 1, 5, 11).

Typically, part 1 of the standard specifies methods for determining the dynamic mechanical properties of rigid plastics within the region of linear viscoelastic behavior. The part 5 describes the specific test method for the flexural test. Part 11 specifies methods for determining a value of the glass transition temperature (Tg) from the dynamic mechanical properties measured during a linear temperature scan under heating conditions.

According to these standards, a flexural vibration method may be used to determine the components of Young's complex modulus (storage modulus, loss modulus, and tan delta) of the sample at a specific frequency in the range of 0.01 Hz to 100 Hz as a function of temperature. From these data, a value for the glass transition will be determined.

The following setup were used:
Dynamic Mechanical Analyser DMAQ800 from TA Instrument.
Mode of Deformation: 3-point-bending test.
Frequency 1 Hz.
Oscillation strain imposed 0.05% (calculated to be within the linear viscoelastic range).
Static Force 0.01 N
Heating/cooling rate: 2 °C/min.
Temperature Range: -70°C to 150°C.
Clamp/Mode deformation: 3-point-bending clamp (low friction).

The results are provided in the following table:

| | **Comparative Composition 1** | **Comparative Composition 2** | **Composition 3 (invention)** | **Composition 4 (invention)** | **Composition 5 (invention)** |
|---|---|---|---|---|---|
| **Viscosity** | <10 mPa·s | 150 mPa·s | 150 mPa·s | 6000-7000 mPa·s | 350 mPa·s |
| **Aspect after 1Month at 25°C in 20g HDPE bottle** | unwanted polymerization | ok | ok | ok | ok |
| **Dispensability** | Not ok | ok | ok | ok | ok |
| **Initial value: Tensile shear after 7 days Mpa** | nd | 15 | 11 | 10 | 8 |
| **tensile shear after 100hours (85% RH/85°C)** | nd | 0% | 100% of initial value | 90% of initial value | not assessed |
| **tensile shear after 250hours (85% RH/85°C)** | nd | 0% | 100% of initial value | 85% of initial value | not assessed |
| **tensile shear after 500hours (85% RH/85°C)** | nd | 0% | 81% of initial value | 80% of initial value | not assessed |
| **tensile shear after 1000hours (85% RH/85°C)** | nd | 0% | 56% of initial value | 69% of initial value | 53% of initial value |
| **Storage modulus at 25°C** | nd | 1756 MPa | 101 MPa | 145 MPa | not assessed |
| **Tg (by DMA)** | nd | 84°C | 92 °C | 86°C | not assessed |
| **Blooming** | Very low | Low | Very low | Very low | Very low |

| | | | | | |
|---|---|---|---|---|---|
| Nd : not determined | | | | | |

Comparative composition 1 presents the disadvantage of being too fluid (too low viscosity) to be dispensable. Besides, for this composition 1, the choice of thickener has led to not good thickening effect and unwanted polymerization.

A typical low blooming MECA adhesive in comparative composition 2 does not withstanding even 100hours at 85°C/85% RH.

On the contrary, compositions 3, 4 and 5 according to the inventions exhibit:
- Good viscosity that enables the dispensability test;
- Good stability after 1 month at 25°C in a HDPE bottle;
- Very low blooming;
- Good stiffness (in view of storage modulus);
- High resistance to hard conditions: retention of tensile shear after several hours at 85°C/85% RH.

## Claims

1. Use of a composition comprising:
∘ n-heptylcyanoacrylate;
∘ a thickener;
wherein said composition has a viscosity ranging from 100 to 7 000 mPa.s at 25°C,
in an electric or electronic or optical device.

2. Use according to claim 1, **characterized in that** the viscosity of the composition ranges from 100 to 1 000 mPa.s at 25°C or 3 000 to 7 000 mPas at 25°C.

3. Use according to anyone of claim 1 or 2, **characterized in that** the composition comprises more than 50 % by weight, preferably more than 70 % by weight based on the total weight of said composition.

4. Use according to anyone of claims 1 to 3, **characterized in that** the composition comprises more than 80 % by weight of n-heptylcyanoacrylate based on the total weight of said composition.

5. Use according to anyone of claims 1 to 4, **characterized in that** the thickener is selected from the group consisting of: polyvinyl acetates, partially hydrolyzed polyvinyl acetates, copolymers of polyvinyl chloride and polyvinyl acetate, copolymers of polyethylene and polyvinyl acetate, copolymers of vinyl chloride and acrylonitrile, and mixtures thereof.

6. Use according to anyone of claims 1 to 5, **characterized in that** the thickener is a copolymer of polyvinyl chloride and polyvinyl acetate.

7. Use according to anyone of claims 1 to 6, **characterized in that** total weight content of thickeners in the composition ranges from 3 to 18% by weight, preferably from 4 to 15 % by weight, based on the total weight of the composition.

8. Use according to anyone of claims 1 to 7, **characterized in that** the composition has a glass transition temperature ranging from 40°C to 120°C, more preferably from 50°C to 115°C, even more preferably from 80°C to 112°C.

9. Use according to anyone of claims 1 to 8, **characterized in that** the composition exhibits a storage modulus at 25°C ranging from 10 to 300 MPa, more preferably from 50 to 150 MPa at 25°C.

10. Use according to anyone of claims 1 to 9, **characterized in that** the composition comprises at least one additional ingredient selected from the group consisting of: an acid stabilizing agent, a radical stabilizing agent, a metal adhesion promoter, a thixotropic agent, a toughener, an accelerating agent, a filler, a plasticizer, and mixtures thereof.

11. Use according to anyone of claims 1 to 10, **characterized in that** the composition comprises less than 14 % by weight of plasticizer comprising at least one ester group based on the total weight of the composition, preferably the composition does not comprise a plasticizer comprising at least one ester group.

12. Use according to anyone of claims 1 to 11, **characterized in that** the composition is a one-part composition.

13. Use according to anyone of claims 1 to 12, **characterized in that** it does not comprise metallocene or photoinitiator.

14. Use according to anyone of claims 1 to 13, **characterized in that** the composition comprises:
- more than 80 % by weight of n-heptylcyanoacrylate;
- from 3% to 18% by weight of thickener selected from copolymers of polyvinyl chloride and polyvinyl acetate;
- from 0% to 1% by weight of accelerating agent based on the total weight of the composition;
said composition having a viscosity ranging from 100 to 7 000 mPa.s at 25°C.

15. Use according to anyone of claims 1 to 14, wherein it comprises less than 20% by weight of additional cyanoacrylate (different from n-heptylcyanoacrylate) based on the total weight of the composition.

16. Use of a composition comprising:
- n-heptylcyanoacrylate;
- a thickener;
said composition having a viscosity ranging from 100 to 7 000 mPa.s at 25°C,
for improving the lifetime of a joint in an electronic, electric or optical device.

17. Electronic, electric or optical device comprising at least one joint formed from a composition comprising:
- n-heptylcyanoacrylate;
- a thickener;
said composition having a viscosity ranging from 100 to 7 000 mPa.s at 25°C.

18. Composition comprising:
- n-heptylcyanoacrylate ;
- a thickener,
said composition having a viscosity ranging from 100 to 7 000 mPa.s at 25°C,
provided that the composition is not a composition consisting of n-heptylcyanocrylate, 950 ppm butylhydroxyanisole, 1 ppm of methane sulfonic acid, 5 ppm of sulfur dioxide, 8% by weight of a copolymer of polyvinylchloride and polyvinylacetate, and 0.15wt% of dibenzo-18-crown-6, based on the total weight of the composition.

19. Composition according to claim 18, **characterized in that** it does not comprise metallocene or photoinitiator.

20. Composition according to claim 18 or 19, wherein it comprises less than 20% by weight of additional cyanoacrylate (different from n-heptylcyanoacrylate) based on the total weight of the composition.
